Europäisches Patentamt

European Patent Office

Office européen des brevets

(11) Publication number: 0 402 965 A2

# EUROPEAN PATENT APPLICATION

(21) Application number: 90200942.2

(22) Date of filing: 18.04.90

(51) Int. Cl.5: A23L 1/20, A23L 3/18, A23L 3/22

(30) Priority: 28.04.89 GB 8909779

(43) Date of publication of application:
19.12.90 Bulletin 90/51

(84) Designated Contracting States:
AT BE CH DE DK ES FR GB GR IT LI LU NL SE

(71) Applicant: THE PROCTER & GAMBLE COMPANY
One Procter & Gamble Plaza
Cincinnati Ohio 45202(US)

(72) Inventor: Rahrooh, Ghobad
2001 Washington Circle East
Cincinnati, Ohio 42215(US)
Inventor: Borlinghaus, Axel Horst
Hermannstrasse 3
D-6520 Worms(DE)

(74) Representative: Canonici, Jean-Jacques et al
Procter & Gamble European Technical
Center N.V. Temselaan 100
B-1853 Strombeek-Bever(BE)

(54) Apparatus for the sterilization of fluid foods.

(57) The invention is an apparatus for an improved sterilization of fluid foods which comprises a steam infusion unit equipped with a distribution system consisting in at least one deflected cup with smooth edges.

The apparatus according to the invention may apply to single strength as well as concentrated fluid foods.

EP 0 402 965 A2

# APPARATUS FOR THE STERILIZATION OF FLUID FOODS

## Technical Field

This invention relates to an apparatus for an improved sterilization of fluid foods while avoiding physical and chemical damages to said fluid foods. The apparatus described herein may apply to single strength fluid foods as well as to concentrated fluid foods and is preferably used for the sterilization of fruit juices.

This apparatus can be used for the continuous production of sterilized fluid foods.

## Background

In order to produce shelf stable fluid foods, it is necessary to sterilize these foods; sterilization is a well known process and has many possible variants, one of which is ultra high temperature processing (UHT).

Such process comprises the heating of the product to be sterilized for a very short time i.e. a few seconds, followed by a rapid cooling.

One way of performing such sterilization is to use steam infusion systems in which the product is put into contact with a pressurized steam atmosphere; the steam then condenses within the product, heating it instantaneously. When treating fluid foods containing volatile components, the process can be performed on concentrated sources of fluid foods, and the final concentration is adjusted after sterilization.

The European patent application published under the number 0 247 249 discloses such a process and US patent application 4,161,909 discloses a steam infusion unit.

It is an object of the present invention to provide an apparatus which will improve the heat transfer to the fluid food in the steam infusion unit, consequently performing an improved sterilization of the fluid food.

Steam infusion is a relatively smooth process when considering the physical and chemical quality of the treated fluid food, compared to other sterilizing processes. However, some treated fluid foods still suffer chemical or physical damages throughout the process, especially such fragile fluid foods as pulp containing fruit juices.

It is another object of the present invention to provide an apparatus to sterilize fluid foods without damaging the treated product. Other advantages of the invention will be described in the following.

## Summary of the invention

The apparatus according to the invention comprises a steam infusion unit and a control system.

The steam infusion unit is equipped with a fluid food distribution system consisting in at least one deflected cup with smooth edges. The apparatus herein is preferably used for the sterilization of fruit juices.

## Detailed description

The apparatus according to the invention comprises a steam infusion unit in which the fluid food to be heated is put into contact with the pressurized steam; this is a key step in the process to achieve a complete and efficient sterilization of the fluid foods, and is also one of the steps where some of the damages to the product occur.

It has now been found that using at least one deflected cup with smooth edges as a distribution system for the fluid food in the steam infusion unit will improve the heat transfer to the fluid food and prevent the fluid food from being damaged.

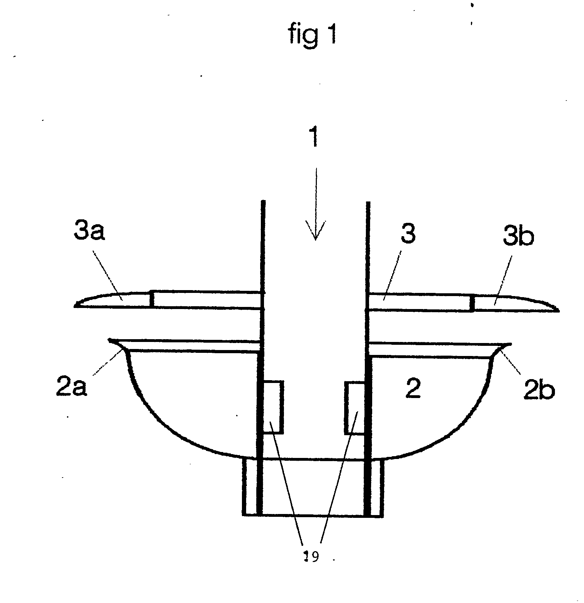

Fig. 1 is a cross section view of the typical deflected cup which is used as a distribution system in steam infusion units according to the invention.

The fluid food flow arrives from (1), for instance via a tube, passes through the openings (19), runs then in the cup (2) which guides it towards the lid (3), which spreads the flow of fluid food into a film falling in the steam infusion unit.

The expression "deflected cup" as used herein encompasses the cup (2) with the lid (3); it is important that both the cup (2) and the lid (3) have smooth edges 2a, 2b, 3a, 3b. The word "smooth" being herein understood as the contrary of "sharp"

Such a cup is designed to produce an umbrella-shaped film of fluid food which falls in the steam infusion unit.

This uniform distribution of the fluid food to be treated allows an optimal contact between the fluid food and the steam. Thus, the heat transfer is improved resulting in a more efficient sterilization.

Such a distribution system also guides the fluid food film towards the bottom instead of the walls of the steam infusion unit; contacts between the fluid food and the walls are to be avoided because they cause poor heat transfer and cooked notes on the fluid food, resulting in organoleptic damages.

Such distribution system is also far less stressing to fluid foods than the usual systems, resulting in less damage when treating fluid foods which are physically delicate, for instance, pulp-containing fruit juices.

The distribution system of the steam infusion unit may consist of a single cup, but a preferred embodiment consists in using three deflected cups with smooth edges in a triangular pitch on one plane. Such triangular pitch should be designed so that a fluid food flow of one cup should not interfere with any of the fluid food flows of the two other cups.

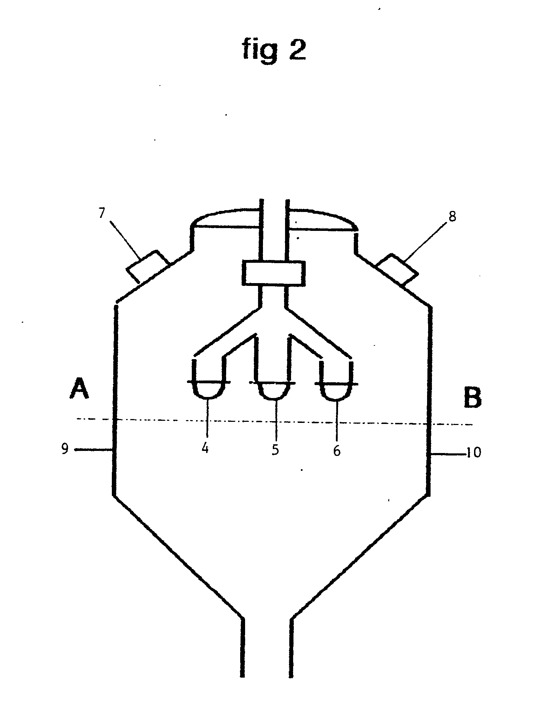

An apparatus for the sterilization of fluid foods by steam infusion also comprises a steam inlet device. The apparatus according to the invention is preferably equipped with a steam inlet device which is positioned above the fluid food distribution system. Fig. 2 shows a steam infusion unit with the three distribution cups 4, 5 and 6 and the steam inlet device, consisting here of two tubes 7 and 8 emerging in the steam infusion unit, which is positioned above the fluid food distribution system.

Such a positioning is important in order to ensure an optimal contact between the fluid food and the steam; such optimal contact does not "disturb" the falling fluid food and therefore highly contributes to a good heat transfer and hence a more effective sterilization process.

It is also preferable to avoid, as much as possible, any contact between the fluid food flow and the vertical walls 9, 10 of the steam infusion unit. Indeed, because they are submitted to steam, the steam infusion unit walls may reach temperatures that are much higher than the temperature of the sterilized fluid food flow; if such contact does occur, it can lead to physical and chemical degradation of the fluid food, as well as organoleptic damages.

Hence, in a preferred embodiment of the invention, the steam infusion unit has a circular section AB (fig. 2) which is large enough so that the fluid food does not flow along the vertical walls of the steam infusion unit.

Nevertheless, it is impossible to completely avoid contacts between the sterilized fluid food flow and the walls of the steam infusion unit, for instance at the bottom of the steam infusion unit. Therefore, in a preferred embodiment of the invention, the temperature of the parts of the lining of the steam infusion unit which can be in contact with the sterilized fluid food are kept at about the same temperature as the sterilized fluid food. In a preferred embodiment, the steam infusion unit is equipped with a water jacket, the temperature of which can be adjusted.

The residence time of the fluid food in the steam infusion unit is still another important parameter when referring to damages which the fluid food may suffer upon sterilization; a too long residence time may lead to organoleptic damages, therefore it is important that this residence time be accurately and continuously controlled.

A preferred way of doing so is to measure the differential pressure at the bottom of the steam infusion unit and to use this measure as a regulating command for a pump which is positioned downstream on the production line. If the differential pressure measure is high, the pump will operate faster and as a consequence will increase the fluid food flow rate; hence the residence time will be decreased.

The apparatus of the present invention may function continuously.

The control described herein above is particularly useful when the sterilization of the fluid food is performed continuously.

The apparatus of the present invention can be applied to the sterilization of single-strenght fluid foods as well as concentrated fluid foods.

When the apparatus is applied to concentrated fluid foods, it will be necessary for the apparatus to comprise means for the addition of dilution water; said means for the addition of dilution water may be situated upstream or downstream of the steam infusion unit, and consist typically of a tank, a pump and an on-line connection.

According to a particular feature of the present invention, the apparatus applying to concentrated fluid foods comprises means to continuously control the addition of dilution water. Preferably, said means consist of an on-line Brix meter, acting as a regulating command on the dilution water addition means.

This control system is particularly useful when, as preferred in the present context, the sterilization of the fluid food is performed continuously; indeed, the desired dilution of the finished product can be precisely controlled, and automatically adjusted to the desired value, without any specific intervention in the process.

In the case where the dilution water is added downstream of the infusion unit, such water has to be sterilized beforehand.

After passing through the steam infusion unit, the sterilized fluid food needs to be cooled down.

When the present apparatus is applied to single strength fluid foods, the cooling after sterilization is provided by one or, preferably, several heat exchangers;

When the present apparatus is applied to concentrated fluid foods, and the dilution water is added downstream of the steam infusion unit, the cooling can be advantageously provided by the addition of the sterilized dilution water with the only proviso that said sterilized water be chilled; this is a particularly preferred feature because both cooling and dilution of the sterilized concentrated fluid food are performed at the same time in a single process step.

Heat-exchangers can optionally be used to complement such a cooling by the dilution water.

When dilution water is added upstream of the steam-infusion unit, heat-exchangers are typically used to cool the product after sterilization. The following examples will illustrate some possible executions of the invention but are not intended to limit the scope of the application.

Examples

Example 1

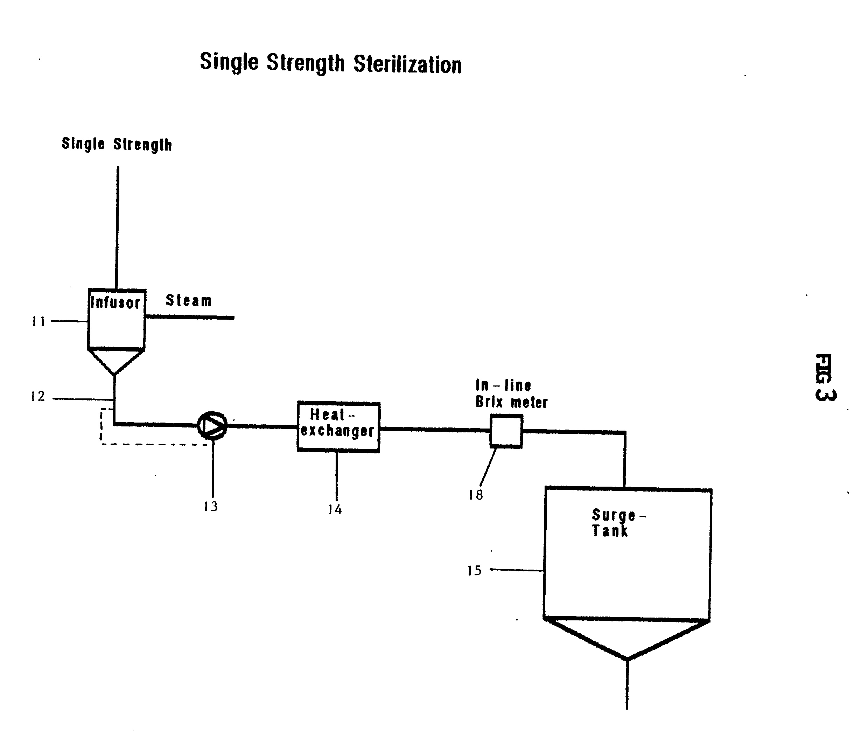

This example illustrates the functioning of the apparatus of the invention when applied to a single strength fluid food, and refers to fig. 3.

The single strength fruit juice is distributed in the steam infusion 11; the distribution cups which are used are those according to the invention.The differential pressure is measured in 12 and acts as a regulating command on the pump 13; this mechanism acts as a regulation on the residence time of the product in the steam infuser.

The sterilized product is then cooled in a heat exchanger 14 (or several) and passes through a Brix meter 18 before being stored in a surge tank 15. This processs can be continuously performed.

Example 2

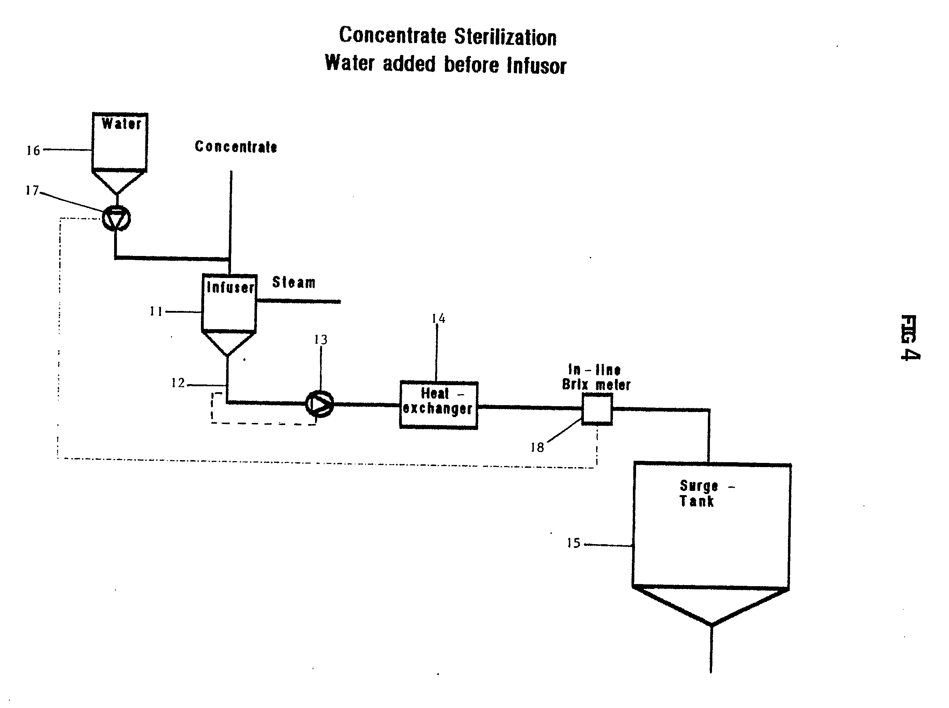

This example refers to fig. 4, illustrating the functioning of the apparatus of the invention when applied to a concentrated source of fluid food, and water is added before sterilization.

Water is added to the concentrated source of fluid food via a water feed tank 16 and a pump 17 before sterilization. The diluted fluid food is sterilized in the steam infuser 11, using the distribution cups according to the invention. The differential pressure is measured in 12 and acts as a regulating command on the pump 13; this mechanism acts as a regulation on the residence time of the product in the steam infuser.

The sterilized product is then cooled in a heat exchanger (or several) 14, passes through a Brix meter 18 and is stored in a tank 15.

The Brix meter 18 is connected to the water feed pump 17, allowing a permanent and accurate control of the Brix of the finished product.

This process can be continuously performed.

Example 3

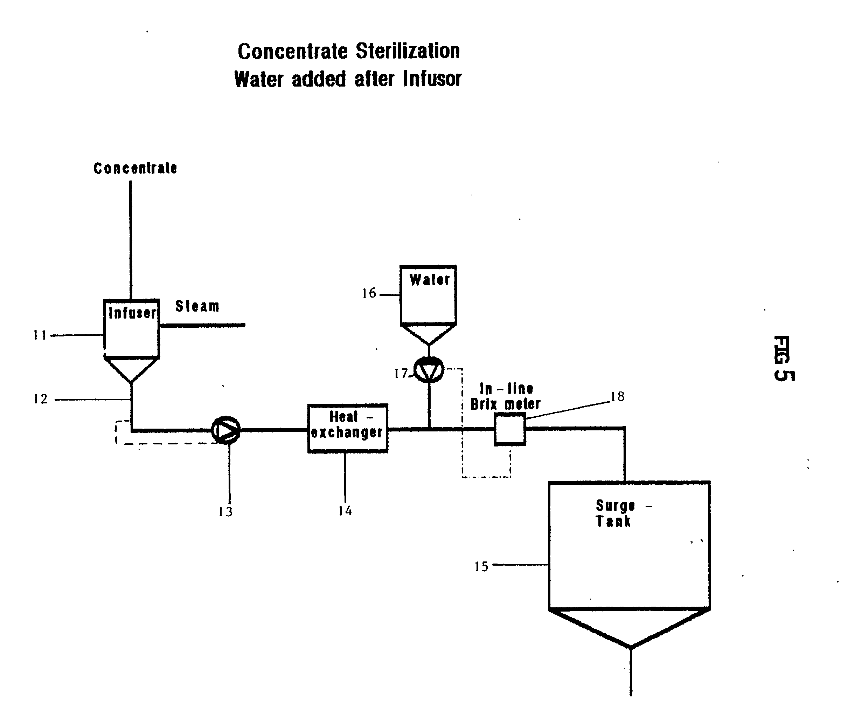

This example refers to fig. 5 and illustrates the functioning of the apparatus of the invention when applied to the sterilization of concentrated sources of fluid food, and separately sterilized water is added after sterilization.

The concentrated source is sterilized in the steam infuser 11, using the distribution cups according to the invention; the differential pressure is measured in 12 and acts as a regulating command on the pump 13; this mechanism controls the residence time of the product in the steam infuser; the sterilized product may then pass through a heat exchanger 14.

In this case, the heat exchanger is not indispensable; the separately sterilized water is then added via a feed tank 16 and a pump 17; the Brix of the sterilized, diluted product is then measured and the finished product is stored in a tank 15.

The Brix meter is connected to the pump 17, allowing a permanent and accurate control of the Brix of the finished product.

This process can be continuously performed.

Claims

1. An apparatus for the sterilization of fluid foods comprising a steam infusion unit characterized in that the steam infusion unit is equipped with a fluid food distribution system consisting of at least one deflected cup with smooth edges.

2. An apparatus according to claim 1 wherein the fluid food distribution system consists of three deflected cups with smooth edges in a triangular pitch in one plane.

3. An apparatus according to claims 1 or 2 wherein the steam infusion unit is equipped with a steam inlet device which is positioned above the fluid food distribution system.

4. An apparatus according to any of the preceding claims wherein the steam infusion unit has a circular section which is large enough so that the fluid food does not flow along the vertical walls of the steam infusion unit.

5. An apparatus according to any of the preceding claims wherein the parts of the lining of the steam infusion unit which can be in contact with the sterilized fluid food, are kept at about the same temperature as the sterilized fluid food.

6. An apparatus according to claim 5 wherein the steam infusion unit is equipped with a water jacket, the temperature of which can be adjusted.

7. An apparatus according to any of the preceding claims wherein the residence time of the fluid food in the steam infusion unit is controlled by means of a differential pressure measure.

8. The apparatus according to any of the preceding claims, which applies to concentrated fluid foods and comprises means for the addition of dilution water.

9. An apparatus according to claim 8, which comprises means to continuously control the addition of dilution water.

10. An apparatus according to claim 9, wherein said means consist of an in-line Brix-meter acting as a regulating command on thc dilution water addition means.

11. An apparatus according to any of the preceding claims characterized in that it is suitable for a continuous functioning.

# fig 1

1

3a 3 3b

2a 2 2b

19

# fig 2

FIG 3

Single Strength Sterilization

FIG 4

Concentrate Sterilization
Water added before Infusor

**Concentrate Sterilization**
**Water added after Infusor**

Concentrate

Infuser  Steam

Water

In-line
Brix meter

Heat-
exchanger

Surge-
Tank

EP 0 402 965 A2

FIG 5